# EUROPEAN PATENT SPECIFICATION

(11) **EP 1 570 163 B1**
(45) Date of publication and mention of the grant of the patent: **16.08.2006**
(21) Application number: 03700030.4
(22) Date of filing: 06.01.2003
(51) Int. Cl.: F02D 35/00, F02D 19/08, F02D 19/10, F23R 3/00, F23R 3/40, F01N 3/20, F01N 3/18

(54) **CATALYST HEAT RETENTION SYSTEM FOR MULTI-FUEL ENGINE**
KATALYTISCHES WÄRMEDÄMMSYSTEM FÜR MEHRBRENNSTOFFMOTOR
SYSTEME PERMETTANT DE CONSERVER LA CHALEUR DU CATALYSEUR ET DESTINE A UN MOTEUR POLYCARBURANT

(30) Priority: 11.12.2002 US 432763 P
(43) Date of publication of application: 07.09.2005
(73) Proprietor: Clean Air Power, Inc., San Diego, CA 92109 (US)
(72) Inventor: BARBARIE, T., Vince, San Diego, CA 92122 (US); VANDERSLICE, Marc, San Diego, CA 92111 (US)
(74) Representative: Grünecker, Kinkeldey, Stockmair & Schwanhäusser Anwaltssozietät
(86) International application number: PCT/US2003/000302
(87) International publication number: WO 2004/053313

(56) References cited:
- EP-A- 1 217 196
- EP-A- 1 234 966
- WO-A-97/36103
- JP-A- 2001 200 757
- US-A- 4 955 326
- US-A- 2002 007 816
- US-A1- 2002 134 362
- PATENT ABSTRACTS OF JAPAN vol. 007, no. 291 (M-265), 27 December 1983 (1983-12-27) & JP 58 162742 A (TOYOTA JIDOSHA KOGYO KK), 27 September 1983 (1983-09-27)

## Description

### BACKGROUND OF THE INVENTION

### 1. Field of the Invention

The invention relates to internal combustion engines and, more particularly, relates to a system and method for maintaining the efficiency of an oxidation catalyst of a dual fuel or other multi-fuel engine at an acceptable level.

### 2. Discussion of the Related Art

Recent years have seen an increased demand for the use of gaseous fuels as a primary fuel source in compression ignition engines. Gaseous fuels such as propane or natural gas are considered by many to be superior to diesel fuel and the like because gaseous fuels are generally less expensive, provide equal or greater power with equal or better mileage, and produce significantly lower emissions. This last benefit renders gaseous fuels particularly attractive because recently enacted and pending worldwide regulations may tend to prohibit the use of diesel fuel in many engines. The attractiveness of gaseous fuels is further enhanced by the fact that existing compression ignition engine designs can be readily adapted to burn gaseous fuels.

One drawback of gaseous fuels is that they exhibit significantly higher ignition temperatures than do diesel fuel, oil, and other liquid fuels traditionally used in compression ignition engines so that the temperature of gaseous fuels does not increase sufficiently during operation of standard compression ignition engines for self-ignition. This problem is overcome by injecting limited mounts of pilot fuel, typically diesel fuel, into the cylinders of the engine in the presence of a charge of a compressed gaseous fuel/air mixture in the combustion chamber. (The pilot fuel is typically diesel fuel, and the terms "pilot" and "diesel" are therefore used interchangeably herein). The pilot fuel ignites upon injection and bums at a high enough temperature to ignite the gaseous fuel charge.

Many engines are configured to run under at least some speed and load conditions either on pilot-ignited gaseous fuel or on 100% diesel fuel. These engines are commonly known as "dual fuel" engines. It is also conceivable that a dual fuel engine could be provided that can operate on 100% diesel and can alternatively operate on gas ignited by a spark plug or some other source. Dual fuel engines are usually unthrottled, and are almost always lean-burn, i.e., operate under relatively high excess air ratios (lambdas). The invention applies to all of these and other engines. For the sake of convenience, operation of any such engine on 100% diesel will be referred to herein as "diesel-only" operation, and operation on gaseous fuel ignited either by diesel or another source will be described as "gas" operation.

Some dual fuel engines employ methane oxidation catalyst (a methane reducing catalyst) to oxidize unburned methane in the exhaust stream as disclosed in US 2002/0007816. While the typical methane oxidation catalyst (methane reducing) catalyst is not necessary during diesel-only operation because diesel has no methane in its exhaust, it dramatically reduces methane emissions during gas operation.

The typical methane oxidation catalyst operates effectively only at or above a rated minimum "light-off" temperature, typically about 425 °C to 475 °C. When a dual fuel engine operates in diesel-only mode under light load conditions, the exhaust temperatures cool to the point that exhaust gases flowing through the methane oxidation catalyst (methane reducing catalyst) cool the catalyst to a temperature significantly below its light-off temperature, reducing the effectiveness of the catalyst when the engine switches back to gas mode.

Other multi-fuel engines exhibit similar problems. The need therefore has arisen to prevent relatively cool exhaust gases of a multi-fuel engine from unnecessarily overcooling a methane oxidation catalyst.

### SUMMARY OF THE INVENTION

In accordance with an aspect of the invention, a method and system are provided for reducing tailpipe methane emissions by improving catalyst efficiency of a dual fuel or other multi-fuel engine. The system and method are well suited for use in a lean burn, unthrottled dual fuel engine but are usable with other multi-fuel engines as well. When applied to a dual fuel engine, the system and method are configured to route exhaust gases away from a methane oxidation catalyst (methane reducing catalyst) of the engine during periods of diesel-only operation. The system and method thereby prevent undesired cooling of the methane oxidation catalyst with exhaust gases that have no methane emissions. The catalyst remains hotter and maintains higher conversion efficiencies than it would if all gases were always exhausted through the methane oxidation catalyst.

Other aspects and advantages of the invention will become apparent to those skilled in the art from the following detailed description and the accompanying drawings. It should be understood, however, that the detailed description and specific examples, while indicating preferred embodiments of the present invention, are given by way of illustration and not of limitation.

### BRIEF DESCRIPTION OF THE DRAWING

A preferred exemplary embodiment of the invention is illustrated in the accompanying drawings in which:
FIG. 1 schematically illustrates a dual fuel engine constructed in accordance with a preferred embodiment of the present invention; and
FIG. 2 is a flowchart of a routine that can be implemented to selectively route exhaust gases through the engine of FIG. 1.

### DETAILED DESCRIPTION OF THE PREFERRED EMBODIMENTS

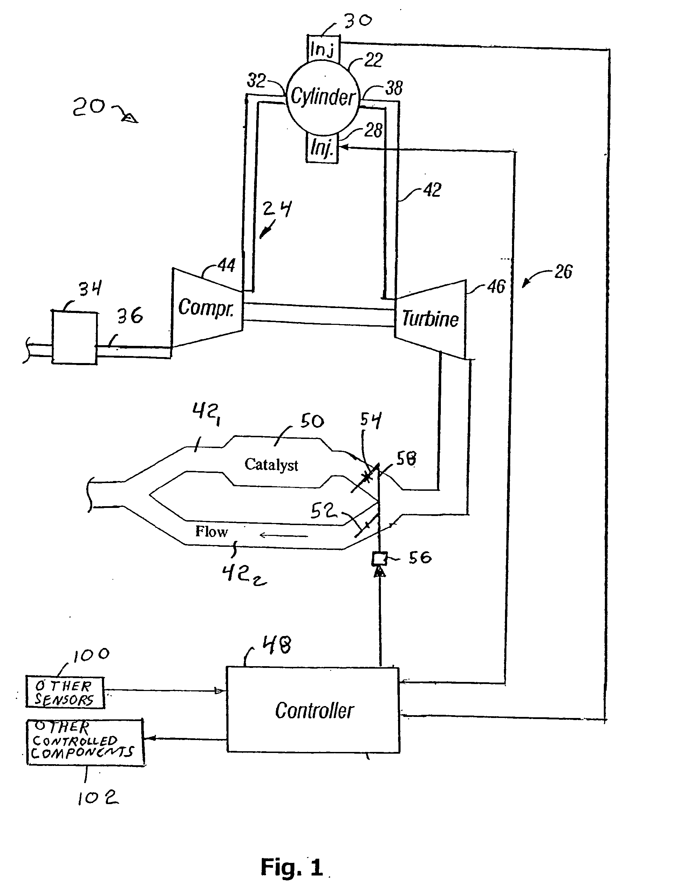

Referring to Fig. 1, a dual fuel diesel engine 20 to which the invention is applicable includes a number of cylinders 22 (only one of which is shown), an intake system 24 supplying an air or air/EGR combustion mixture to the cylinders 22, an exhaust system 26, a fuel injection system, and other components commonly found on a compression ignition engine such as intake and exhaust valves. The fuel injection system includes a source of diesel fuel (not shown) and at least one electronically controlled fuel injector 28 per cylinder 22. The fuel injection system additionally includes a source of a gaseous fuel such as liquid natural gas and at least one electronically controlled natural gas injector 30 per cylinder 22.

The intake system 24 comprises an air intake manifold 32 having a split outlet connected to the various cylinders 22 and an inlet connected to an air filter 34 by an intake passage 36. The exhaust system 26 comprises an exhaust manifold 38 opening into an exhaust passage 42. An EGR system (not shown) may recirculate a portion of the exhaust gases from the exhaust passage 42 to the intake passage 36. The illustrated engine 20 is a turbocharged engine having a compressor 44 located in the air intake passage 36 upstream of the intake manifold 32 and a turbine 46 located in the exhaust passage 42 downstream of the exhaust manifold 38. A controller 48 receives signals indicative of, e.g., coolant temperature, air charge temperature, speed, etc. from a system of sensors, collectively denoted 100 and delivers output signals to the injectors 28 and 30 and to other controlled components, collectively denoted 102. The controller 48 preferably comprises a programmable ECU. All of these components are standard in a dual fuel engine.

Still referring to Fig. 1, a portion of the exhaust passage 42 located downstream of the turbine 46 is split into two sections 42₁ and 42₂ before reconverging as a single passage. A conventional methane oxidation catalyst (methane reducing catalyst) 50 is provided in one of the sections 42₁. The catalyst 50 may be any catalyst suitable for reducing methane emissions through oxidation. One such catalyst is commercially available from Kemira. A light-off catalyst (not shown) may be provided upstream of the catalyst 50. A muffler and/or one or more after-treatment devices such as a particulate trap (also not shown) may be located in the exhaust passage 42 upstream, downstream, and/or within one or both of the sections 42₁ and 42₂.

A valve arrangement is provided to selectively route exhaust gas flow through a desired one of the passage sections 42₁ and 42₂. A single diverter valve at the upstream or downstream end of the split sections could be suitable for this purpose. In the illustrated embodiment, the valve arrangement includes two electronically actuated valves 52 and 54. Valve 52 opens or closes flow through the passage section 42₂ that lacks the methane oxidation catalyst 50. This valve is normally closed. The valve 54 opens or closes flow though the passage section 42₁ containing the methane oxidation catalyst 50. This valve is normally open. Although both valves 52 and 54 are shown near the upstream ends of the passage sections 42₁ and 42₂, one or both valves 52 and 54 could be located at or near the downstream ends of the passage sections 42₁ and 42₂.

The controller 48 preferably controls the valves 52 and 54 so that they are always in opposed operational states, hence assuring that one valve 52 or 54 is always open and the other valve 54 or 52 is always closed. For instance, both valves 52 and 54 may be pneumatically actuated by a single solenoid actuator 56 coupled to both valves 52 and 54 by a suitable linkage 58. The solenoid 56 preferably is configured such that valve 52 is closed and valve 54 is opened whenever the solenoid 56 is deenergized, leading to a default condition in which exhaust gases are routed through the catalyst 50.

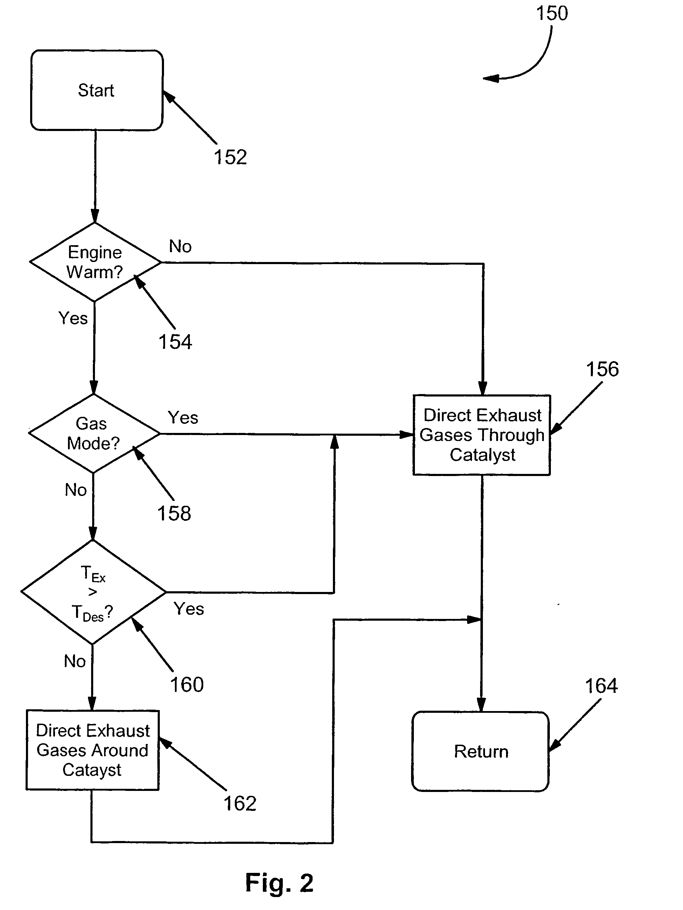

Control of the valves 52 and 54 will now be described in connection with a control routine designated 150 in Fig. 2. A dual fuel engine is typically operated in diesel-only mode during startup because most engines do not run well on gas until the engine reaches an acceptable operating temperature of about 65 °C as measured by a coolant temperature sensor (not shown). The methane-free exhaust gases cannot be appreciably treated by the catalyst 50 at startup, but they can be used to preheat the catalyst 50 sufficiently to make it at least approach its light-off temperature, hence improving catalyst efficiency when the engine 20 switches into gas mode. Hence, the routine 150 proceeds from Start in block 152 to an inquiry Block 154, in which the routine 150 determines whether the engine has reached its operating temperature. If not, the routine 150 proceeds to block 156 in which the solenoid 56 is deenergized to open valve 54 and close valve 52, thereby routing the exhaust gases through the catalyst 50 to preheat the catalyst. The routine 150 then proceeds to return in Block 164.

Once the routine 150 determines in Block 154 that engine 20 has reached its operating temperature, the controller 48 implements a valve control logic designed to maximize oxidation effectiveness by keeping the catalyst 50 as warm as possible during periods when the catalyst is not required. Specifically, the controller 48 is operable to control the solenoid 56 to 1) route exhaust gases around the catalyst 50 when the engine 20 is operating in diesel-only mode and the methane-free exhaust gases produced during this mode are relatively cool and 2) otherwise route exhaust gases through the catalyst 50. Hence, the routine 150 proceeds to inquiry Block 158 to determine whether the engine is operating in gas mode. If so, the routine 150 proceeds to Block 156, where the solenoid 56 is deenergized to open the valve 54 and close the valve 52, thereby routing the exhaust cases through the catalyst 50. The routine 150 then proceeds to Return in Block 164.

If the answer to the inquiry of Block 158 is NO, the routine 150 determines that the engine is operating in diesel-only mode and proceeds to block 160, where the routine 150 determines whether diesel-only the methane-free exhaust gases produced during diesel-only operation are above a desired temperature. If the answer to this inquiry is YES, the routine 150 proceeds to Block 156, where the controller 48 deenergizes the solenoid 56 to open the valve 54 and close the valve 52, thereby routing the exhaust gases through the catalyst 50. The routine 150 then once again proceeds to Return in Block 164.

Conversely, if the routine 150 determines in Block 160 that the temperature of the methane-free exhaust gas flow is below the desired temperature, the routine 150 proceeds to Block 162, wherein controller 48 energizes the solenoid 56 to close the valve 54 and open the valve 52, thereby routing the gases away from the catalyst 50 by routing it around the catalyst, hence avoiding unnecessarily cooling the catalyst and reducing its effectiveness. The desired temperature for valve switchover typically will be one that is close enough to the catalyst's light-off temperate to maintain at least 40% to 50% catalyst efficiency. In the case of the typical methane oxidation catalyst (methane reducing catalyst), the desired temperature may be the catalyst's light-off temperature or another, lower temperature that is within, e.g., 25 °C to 50 °C of the catalyst's light-off temperature. This routing keeps the catalyst 50 warm and ready to convert methane when the engine 20 is again fueled at least to some extent with natural gas. The routine then again proceeds to Return in Block 164.

The logic implemented by routine 150 described in the preceding paragraph requires input indicative of 1) the operational mode of the engine 20 (diesel-only versus gas) and 2) exhaust gas temperature. The operational mode can be monitored simply by monitoring commanded gas flow, with the controller 48 determining that the engine 20 is operating in the gas mode whenever the controller 48 issues a gas supply command to the injector 30. Exhaust gas temperature can be monitored directly by an exhaust gas temperature sensor (not shown). In the illustrated embodiment, however, exhaust gas temperature is monitored indirectly in order to negate the need for a separate temperature sensor. Engine load is a useful indicator of exhaust gas temperature. Load could be monitored directly in a throttled engine or even in an unthrottled engine having a special load sensor. In the present example of a more typical unthrottled engine, load is monitored indirectly by monitoring the commanded total fuel flow to the injectors 28 and 30. ("Total fuel flow" is defined as the combined flow of gas and diesel when the engine is fueled at least primarily by gas.) In a typical engine, the exhaust gases will be sufficiently warm to warrant routing through the catalyst 50 when the engine load is above a designated value "x." "X" will vary from engine to engine and within a particular engine based on engine speed, air charge temperature, and possibly other factors. "X" will typically be between about 30 % and 50 % of full load for an unthrottled truck engine.

The logic described above is summarized in the input and output matrix of Table 1:

**Table 1**

| Input and Output Matrix | | | | | |
|---|---|---|---|---|---|
| Input | Engine Load | >x | >x | <x | <x |
| Input | CNG Flow | >0 | 0 | >0 | 0 |
| Output | Solenoid | Off | Off | Off | On |
| Result | Valve 52 | Closed | Closed | Closed | Open |
| Result | Valve 54 | Open | Open | Open | Closed |

Hence, the system increases the effectiveness of the methane oxidation catalyst (methane reducing catalyst) under all conditions simply by either routing exhaust gases through the methane oxidation catalyst or away from it Preliminary tests have shown that, with this system, methane emissions over the ETC cycle were reduced over 50% with no change in NOx, CO emissions, or efficiency.

Many changes and modifications could be made to the invention. For instance, while the dual fuel engine has been described primarily in conjunction with a methane based gaseous fuel, the concepts disclosed herein are also applicable to other gaseous fuels. For example, the invention may be applied to propane, in which case the oxidation catalyst would be seleded to oxidize propane in the exhaust gas stream. It is also applicable to other dual fuel engines having two disparate fuels including one suitable for exhaust after treatment using an oxidation catalyst. A diesel/gasoline dual fuel engine is one possibility.

The invention is even applicable to a multi-fuel lean burn engine fueled by three or more fuels. For instance, it is applicable to an engine that can be selectively fueled by a pilot ignited fuel whose main fuel charge combustion characteristics can be adjusted by selecting one of two or more gaseous fuels for a given fueling event and/or by mixing desired proportions of two or more gaseous fuels for a given fueling event. Adjusting the combustion characteristics of the main fuel charge can enable direct control of the timing of ignition and rate of combustion of the fuel charge. An engine that can be fueled in this manner is described in U.S. Pat. No. 6,230,683.

The exhaust gases could also be diverted away from the catalyst by routing them through paths other than a split passage going around the catalyst. For instance, the diverted gases could be discharged directly to atmosphere without rejoining the main passage or subjected to some other treatment and then discharged to atmosphere.

In addition, because engine load is used as an indicator of exhaust gas temperature, the controls described above could be based directly on engine load rather than directly on exhaust gas temperature measurements or indirectly on exhaust gas temperature as reflected by measured or determined engine load. In this case, the system would route gases away from the catalyst 50 when the warm engine is operating in diesel-only mode and the engine load is below a designated threshold and would otherwise route exhaust gases through the catalyst. The routine for implementing this control logic would be identical to the routine 150 of Fig. 2 except for the fact that the inquiry Block 160 would be replaced with one in which engine load is compared to a threshold engine load.

Even within the example provided above, the controller 48 could also be programmed with other valve control capabilities. For instance, in addition to taking measures to prevent catalyst overheating, the controller 48 could conceivably be programmed to prevent catalyst overheating by energizing the solenoid 56 when direct or indirect exhaust gas temperature measurements indicate that the exhaust gas temperatures are sufficiently high to risk damage to the catalyst 50 or the associated light-off catalyst. To the extent that they might not be apparent from the above, the scope of these and other variations falling within the scope of the present invention will become apparent from the appended claims.

## Claims

1. A method comprising:
routing exhaust gases through an oxidation catalyst (50) of a multi-fuel engine (20) except when the exhaust gases are free of a gas designated for being oxidized and are below a designated temperature that could undesirably cool the catalyst.

2. The method of claim 1, wherein the routing step comprises routing the gases through the catalyst (50) on engine start-up and thereafter routing the exhaust gases through the catalyst (50) unless the engine (20) is operating in a diesel-only mode and the exhaust gases are below the designated temperature.

3. The method of claim 2, further comprising indirectly monitoring exhaust gas temperature by monitoring engine load.

4. The method of one or more of the preceding claims, wherein the engine is a dual fuel engine (20).

5. The method of claim 4, wherein the dual fuel engine is capable of operating in 1) a diesel-only mode in which the engine is fuelled solely by a liquid fuel that is ignitable by compression ignition and 2) a gas mode in which the engine is fuelled by a pilot-ignited gaseous fuel.

6. The method of one or more of the preceding claims, further comprising determining whether the engine (20) is operating in a start-up mode in which it has not yet reached a designated operating temperature and, if so, routing exhaust gases through the catalyst (50).

7. The method of one or more of the preceding claims, wherein the routing step comprises closing a first valve (54) to prevent exhaust gases from flowing through a passage (42₁) containing the catalyst (50) and opening a second valve (42₂) to route exhaust gases away from the catalyst.

8. The method of claim 1, wherein the engine is a dual fuel engine (20) and the step of routing exhaust gases through the oxidation catalyst (50) occurs after the dual fuel engine initially starts and obtains a designated operating temperature, unless the exhaust gases are free of a gas designated for oxidation and are below a temperature that could undesirably reduce the oxidation efficiency of the catalyst.

9. The method of claim 1, wherein the oxidation catalyst is a methane oxidation catalyst, and further comprising:
fueling the engine (20) with diesel fuel during a start-up mode in which an engine operating temperature is below a designated operating temperature; then
after the engine obtains the designated operating temperature, selectively fueling the engine in 1) a diesel-only mode in which the engine is fueled solely by diesel fuel and 2) a gas mode in which the engine is fueled by a diesel-ignited, methane based, gaseous fuel, wherein the routing step comprises
routing the exhaust gases through the methane oxidation catalyst (50) when the engine is operating in the startup mode; and
after the engine obtains the designated operating temperature, routing exhaust gases through the methane oxidation catalyst unless 1) the engine is being fueled in the diesel-only mode and 2) the temperature of the exhaust gases is significantly below a light-off temperature of the methane oxidation catalyst.

10. A lean burn engine comprising:
(A) at least one cylinder (22);
(B) at least first and second fuel sources capable of supplying corresponding first and second fuels to the cylinder (22), the first fuel being one whose combustion products are capable of reduction by oxidation;
(C) an oxidation catalyst (50); and **characterized by**
(D) means for routing exhaust gases through the oxidation catalyst (50) whenever the engine is being fuelled by the first fuel or the exhaust gases are above a temperature that could undesirably cool the catalyst.

11. The lean burn engine of claim 10, further comprising:
an exhaust passage (42) having an inlet connected to the cylinder (22) and having an outlet wherein the oxidation catalyst is located in the exhaust passage (42), and wherein the means for routing comprises
(1) a valve arrangement (52, 54) located in the exhaust passage (42), the valve arrangement being selectively switchable from a first state routing exhaust gases through the catalyst (50) to a second state routing exhaust gases around the catalyst; and
(2) a controller (48) that is coupled to the valve arrangement that is operable, when the exhaust gases are above said temperature, to route exhaust gases through the catalyst (50), except when the engine is not being fuelled by the first fuel and the exhaust gases are below said temperature.

12. The lean burn engine of claim 11, wherein the valve arrangement comprises a first valve (54) that controls flow through a branch (42₁) of the exhaust passage that contains the catalyst (50) and a second valve (52) that controls flow through a branch (42₂) of the exhaust passage that flows around the catalyst, one of the valves being normally open and the other of the valves being normally closed.

13. The lean burn engine of claim 12, wherein the first valve (54) is normally open and the second valve (52) is normally closed, and further comprising a solenoid (56) that is connected to the controller (48) and that actuates both of the first and second valves.

14. The lean burn engine of one or more of claims 12 and 13, wherein the controller (48) is operable to open the first valve (54) and close the second valve (52) when the engine temperature is above a designated operating temperature and the engine is being fuelled with the first fuel.

15. The lean burn engine of one or more of claims 11-14, wherein the engine is a dual fuel engine (20), the first fuel source is a source of a gaseous fuel, and the second fuel source is a source of a liquid fuel.

16. The lean burn engine of one or more of claims 11-14, wherein the controller (48) is configured to monitor exhaust gas temperature.

17. The lean burn engine of claim 16, wherein the controller (48) is configured to monitor exhaust gas temperature indirectly by monitoring engine load.

## Patentansprüche

1. Verfahren, das umfasst:
Leiten von Abgasen durch einen Oxidations-Katalysator (50) eines Vielstoffmotors (20) außer wenn die Abgase frei von einem Gas sind, das zur Oxidation bestimmt ist, und unter einer vorgegebenen Temperatur liegen, die den Katalysator unerwünschterweise abkühlen könnte.

2. Verfahren nach Anspruch 1, wobei der Schritt des Leitens das Leiten der Gase durch den Katalysator (50) beim Anlaufen des Motors und anschließend Leiten der Abgase durch den Katalysator (50) umfasst, wenn der Motor (20) nicht in einem Nur-Diesel-Modus arbeitet und die Abgase unter der vorgegebenen Temperatur liegen.

3. Verfahren nach Anspruch 2, das des Weiteren indirektes Überwachen der Abgastemperatur durch Überwachen der Motorlast umfasst.

4. Verfahren nach einem der vorangehenden Ansprüche, wobei der Motor ein Zweistoffmotor (20) ist.

5. Verfahren nach Anspruch 4, wobei der Zweistoffmotor in der Lage ist, in 1) einem Nur-Diesel-Modus, in dem der Motor nur mit einem flüssigen Kraftstoff betrieben wird, der durch Kompressionszündung gezündet werden kann, und 2) einem Gas-Modus, in dem der Motor mit einem vorgezündeten gasförmigen Kraftstoff betrieben wird, zu arbeiten.

6. Verfahren nach einem oder mehreren der vorangehenden Ansprüche, das des Weiteren umfasst, dass festgestellt wird, ob der Motor (20) in einem Anlaufmodus arbeitet, in dem er noch nicht eine vorgegebene Betriebstemperatur erreicht hat, und wobei, wenn dies der Fall ist, Abgase durch den Katalysator (50) geleitet werden.

7. Verfahren nach einem oder mehreren der vorangehenden Ansprüche, wobei der Schritt des Leitens Schließen eines ersten Ventils (54), um zu verhindern, dass Abgase durch einen Kanal (42₁) strömen, der den Katalysator (50) enthält, und Öffnen eines zweiten Ventils (42₂), um Abgase von dem Katalysator wegzuleiten, umfasst.

8. Verfahren nach Anspruch 1, wobei der Motor ein Zweistoffmotor (20) ist und der Schritt des Leitens von Abgasen durch den Oxidations-Katalysator (50) stattfindet, nachdem der Zweistoffmotor zunächst anläuft und eine vorgegebene Betriebstemperatur erreicht, außer wenn die Abgase frei von einem Gas sind, das zur Oxidation bestimmt ist, und unter einer Temperatur liegen, die unerwünschterweise den Oxidationswirkungsgrad des Katalysators verringern könnte.

9. Verfahren nach Anspruch 1, wobei der Oxidations-Katalysator ein Methan-Oxidations-Katalysator ist, und das des Weiteren umfasst:
Betreiben des Motors (20) mit Diesel-Kraftstoff während eines Anlaufmodus, in dem eine Motor-Betriebstemperatur unter einer vorgegebenen Betriebstemperatur liegt; dann,
nachdem der Motor die vorgegebene Betriebstemperatur erreicht hat, selektives Betreiben des Motors in 1) einem Nur-Diesel-Modus, in dem der Motor nur mit Diesel-Kraftstoff betrieben wird, und 2) einem Gas-Modus, in dem der Motor mit einem dieselgezündeten gasförmigen Kraftstoff auf Methan-Basis betrieben wird, wobei der Schritt des Leitens umfasst:
Leiten der Abgase durch den Methan-Oxidations-Katalysator (50), wenn der Motor in dem Anlaufmodus arbeitet; und
nachdem der Motor die vorgegebene Betriebstemperatur erreicht hat, Leiten von Abgasen durch den Methan-Oxidations-Katalysator, außer wenn 1) der Motor in dem Nur-Diesel-Modus betrieben wird, und 2) die Temperatur der Abgase erheblich unter einer Anspring-Temperatur des Methan-Oxidations-Katalysators liegt.

10. Magermotor, der umfasst:
A) wenigstens einen Zylinder (22);
B) wenigstens eine erste und eine zweite Kraftstoffquelle, die in der Lage sind, dem Zylinder (22) einen entsprechenden ersten und zweiten Kraftstoff zuzuführen, wobei der erste Kraftstoff ein Kraftstoff ist, dessen Verbrennungsprodukte durch Oxidation reduziert werden können;
C) ein Oxidations-Katalysator (50); und **gekennzeichnet durch**:
D) eine Einrichtung, die Abgase immer dann **durch** den Oxidations-Katalysator (50) leitet, wenn der Motor mit dem ersten Kraftstoff betrieben wird oder die Abgase über eine Temperatur liegen, die den Katalysator unerwünschterweise abkühlen könnte.

11. Magermotor nach Anspruch 10, der des Weiteren umfasst:
einen Auslasskanal (42), der einen Einlass, der mit dem Zylinder (22) verbunden ist, und einen Auslass hat, wobei sich der Oxidations-Katalysator in dem Auslasskanal (42) befindet und die Einrichtung zum Leiten umfasst:
1) eine Ventilanordnung (52, 54), die sich in dem Auslasskanal (42) befindet, wobei die Ventilanordnung selektiv aus einem ersten Zustand, in dem Abgase durch den Katalysator (50) geleitet werden, in einen zweiten Zustand umgestellt werden kann, in dem Abgase um den Katalysator herumgeleitet werden.
2) eine Steuereinheit (48), die mit der Ventilanordnung gekoppelt ist und so betrieben werden kann, dass, wenn die Abgase über der Temperatur liegen, Abgase, außer, wenn der Motor nicht mit dem ersten Kraftstoff betrieben wird und die Abgase unterhalb der Temperatur liegen, durch den Katalysator (50) geleitet werden.

12. Magermotor nach Anspruch 11, wobei die Ventilanordnung ein erstes Ventil (54), das Strom durch einen Zweig (42₁) des Abgaskanals steuert, der den Katalysator (50) enthält, und ein zweites Ventil (52) umfasst, das Strom durch einen Zweig (42₂) des Abgaskanals steuert, der um den Katalysator herum strömt, wobei eines der Ventile normalerweise offen ist und das andere der Ventile normalerweise geschlossen ist.

13. Magermotor nach Anspruch 12, wobei das erste Ventil (54) normalerweise offen ist und das zweite Ventil (52) normalerweise geschlossen ist, und der des Weiteren einen Elektromagneten (56) umfasst, der mit der Steuereinheit (48) verbunden ist und sowohl das erste als auch das zweite Ventil betätigt.

14. Magermotor nach einem der Ansprüche 12 und 13, wobei die Steuereinheit (48) so betrieben werden kann, dass sie das erste Ventil (54) öffnet und das zweite Ventil (52) schließt, wenn die Motortemperatur über einer vorgegebenen Betriebstemperatur liegt und der Motor mit dem ersten Kraftstoff betrieben wird.

15. Magermotor nach einem oder mehreren der Ansprüche 11-14, wobei der Motor ein Zweistoffmotor (20) ist, die erste Kraftstoffquelle eine Quelle von gasförmigem Kraftstoff ist und die zweite Kraftstoffquelle eine Quelle von flüssigem Kraftstoff ist.

16. Magermotor nach einem oder mehreren der Ansprüche 11-14, wobei die Steuereinheit (48) so konfiguriert ist, dass sie Abgastemperatur überwacht.

17. Magermotor nach Anspruch 16, wobei die Steuereinheit (48) so konfiguriert ist, dass sie Abgastemperatur indirekt durch Überwachen von Motorlast überwacht.

## Revendications

1. Procédé comprenant :
l'acheminement de gaz d'échappement dans un catalyseur d'oxydation (50) d'un moteur à carburant multiple (20) sauf si les gaz d'échappement sont exempts d'un gaz déterminé à oxyder et ont une température inférieure à une température déterminée qui pourrait refroidir le catalyseur d'une manière indésirable.

2. Procédé selon la revendication 1, dans lequel l'étape d'acheminement comprend l'acheminement dans le catalyseur (50) au démarrage du moteur puis l'acheminement des gaz d'échappement dans le catalyseur (50) à moins que le moteur (20) ne fonctionne uniquement en mode diesel et que les gaz d'échappement n'aient une température inférieure à la température déterminée.

3. Procédé selon la revendication 2, comprenant en outre la surveillance indirecte de la température des gaz d'échappement en surveillant la charge du moteur.

4. Procédé selon une ou plusieurs des revendications précédentes, dans lequel le moteur est un moteur à double carburant (20).

5. Procédé selon la revendication 4, dans lequel le moteur à double carburant est apte à fonctionner 1) en un mode diesel uniquement, dans lequel le moteur est alimenté seulement par un carburant liquide qui peut être enflammé par ignition à compression et 2) en un mode gazeux, dans lequel le moteur est alimenté par un carburant gazeux enflammé par pilote.

6. Procédé selon une ou plusieurs des revendications précédentes, comprenant en outre la détermination du fait si le moteur (20) fonctionne en mode démarrage, dans lequel il n'a pas encore atteint une température de fonctionnement déterminée, et, si c'est le cas, l'acheminement des gaz d'échappement dans le catalyseur (50).

7. Procédé selon une ou plusieurs des revendications précédentes, dans lequel l'étape d'acheminement comprend la fermeture d'une première soupape (54) pour empêcher les gaz d'échappement de s'écouler par un passage (42₁) contenant le catalyseur (50) et l'ouverture d'une deuxième soupape (42₂) pour acheminer les gaz d'échappement hors du catalyseur.

8. Procédé selon la revendication 1, dans lequel le moteur est un moteur à double carburant (20) et l'étape d'acheminement des gaz d'échappement dans le catalyseur d'oxydation (50) a lieu une fois que le moteur à double carburant démarre initialement et atteint une température de fonctionnement déterminée, à moins que les gaz d'échappement ne soient exempts d'un gaz déterminé à oxyder et ne soient inférieurs à une température qui pourrait réduire de manière indésirable la performance d'oxydation du catalyseur.

9. Procédé selon la revendication 1, dans lequel le catalyseur d'oxydation est un catalyseur d'oxydation de méthane et comprenant en outre :
l'alimentation du moteur (20) en carburant diesel en mode démarrage, dans lequel une température de fonctionnement du moteur est inférieure à une température de fonctionnement déterminée ; puis,
une fois que le moteur atteint la température de fonctionnement déterminée, l'alimentation sélective du moteur (1) en mode diesel uniquement, dans lequel le moteur est alimenté seulement par du carburant diesel et 2) en mode gazeux, dans lequel le moteur est alimenté en carburant gazeux enflammé au diesel et à base de méthane, l'étape d'acheminement comprenant :
l'acheminement des gaz d'échappement dans le catalyseur d'oxydation de méthane (50) lorsque le moteur fonctionne en mode démarrage ; et,
une fois que le moteur atteint la température de fonctionnement déterminée, l'acheminement des gaz d'échappement dans le catalyseur d'oxydation de méthane à moins que 1) le moteur ne soit alimenté en mode diesel uniquement et que 2) la température des gaz d'échappement ne soit significativement inférieure à une température d'extinction du catalyseur d'oxydation de méthane.

10. Moteur à mélange pauvre comprenant :
(A) au moins un cylindre (22) ;
(B) au moins une première et une seconde sources de carburant aptes à alimenter en premier et second carburants correspondants le cylindre (22), le premier carburant étant parmi ceux dont les produits de combustion sont aptes à réduction par oxydation ;
(C) un catalyseur d'oxydation ; et **caractérisé par**
(D) un moyen d'acheminement des gaz d'échappement dans le catalyseur d'oxydation (50) à chaque fois que le moteur est alimenté en premier carburant et que les gaz d'échappement ont une température supérieure à celle qui pourrait refroidir le catalyseur de manière indésirable.

11. Moteur à mélange pauvre selon la revendication 10, comprenant en outre :
un passage d'échappement (42) dont une entrée est connectée au cylindre (22) et dont une sortie où se trouve le catalyseur d'oxydation se trouve dans le passage d'échappement (42), et le moyen d'acheminement comprenant :
(1) un système de soupape (52, 54) placé dans le passage d'échappement (42), le système de soupape étant sélectivement permutable d'un premier état acheminant les gaz d'échappement dans le catalyseur (50) à un second état acheminant les gaz d'échappement autour du catalyseur ; et
(2) un contrôleur (48) qui est couplé au système de soupape et qui peut être actionné, lorsque les gaz d'échappement sont supérieurs à la température indiquée, pour acheminer les gaz d'échappement dans le catalyseur (50), sauf si le moteur n'est pas alimenté en premier carburant et si les gaz d'échappement sont inférieurs à la température indiquée.

12. Moteur à mélange pauvre selon la revendication 11, dans lequel le système de soupape comprend une première soupape (54) qui contrôle le flux traversant une branche (42₁) du passage d'échappement contenant le catalyseur (50) et une seconde soupape (52) qui contrôle le flux traversant une branche (42₂) du passage d'échappement qui s'écoule autour du catalyseur, une des soupapes étant normalement ouverte et l'autre soupape étant normalement fermée.

13. Moteur à mélange pauvre selon la revendication 12, dans lequel la première soupape (54) est normalement ouverte et la deuxième soupape (52) est normalement fermée, et comprenant en outre un solénoïde (56) qui est connecté au contrôleur (48) et qui actionne à la fois la première et la seconde soupape.

14. Moteur à mélange pauvre selon une ou plusieurs des revendications 12 et 13, dans lequel le contrôleur (48) peut être actionné pour ouvrir la première soupape (54) et fermer la seconde soupape (52) lorsque la température du moteur est supérieure à une température de fonctionnement déterminée et lorsque le moteur est alimenté en premier carburant.

15. Moteur à mélange pauvre selon une ou plusieurs des revendications 11 à 14, dans lequel le moteur est un moteur à double carburant (20), la première source de carburant est une source de carburant gazeux et la seconde source de carburant est une source de carburant liquide.

16. Moteur à mélange pauvre selon une ou plusieurs des revendications 11 à 14, dans lequel le contrôleur (48) est conçu pour surveiller la température du gaz d'échappement.

17. Moteur à mélange pauvre selon la revendication 16, dans lequel le contrôleur (48) est conçu pour surveiller la température du gaz d'échappement indirectement en surveillant la charge du moteur.
